# EUROPÄISCHE PATENTANMELDUNG

(11) **EP 1 101 794 A1**
(43) Veröffentlichungstag der Anmeldung: **23.05.2001**
(21) Anmeldenummer: 00124208.0
(22) Anmeldetag: 09.11.2000
(51) Int. Cl.: C08K 9/04, C08L 15/00, C08L 19/00, B60C 1/00, C08J 3/21

(54) **Kautschukmischungen aus hydroxyl- und/oder carboxylgruppenhaltigen Kautschuken und hydrophobierten oxidischen oder silikatischen Füllstoffen**

(30) Priorität: 22.11.1999 DE 19956097
(71) Anmelder: BAYER AG, 51368 Leverkusen (DE)
(72) Erfinder: Scholl, Thomas, Dr., 51469 Bergisch Gladbach (DE); Peter, Rolf, Dr., 41539 Dormagen (DE); Steiger, Roland, Dr., 41539 Dormagen (DE); Wendling, Peter, 51375 Leverkusen (DE); Trimbach, Jürgen, 50859 Köln (DE); Koski, Ahti, Wilkesport, Ontario, NOP 2RO (CA)

(57) **Zusammenfassung**

Die erfindungsgemäßen Kautschukmischungen, bestehend aus einem Kautschuk, der einen Gesamtgehalt an Hydroxyl- und/oder Carboxylgruppen von 0,1 bis 3 Gew. % aufweist, und 5 bis 500 Gew. Teilen, bezogen auf 100 Gew. Teile Kautschuk, hydrophobierten oxidischen und/oder silikatischen Füllstoff sowie gegebenenfalls weiteren Kautschuken, Kautschukhilfsmitteln und Vernetzern, eignen sich zur Herstellung von Kautschukvulkanisaten mit verbesserten physikalischen Eigenschaften, insbesondere mit verbessertem dynamischem Dämpfungsverhalten, verringertem Abrieb und verbessertem Nassrutschverhalten.

## Beschreibung

Die vorliegende Erfindung betrifft Kautschukmischungen aus hydroxyl- und/oder carboxylgruppenhaltigen Kautschuken und hydrophobierten oxidischen oder silikatischen Füllstoffen sowie ein Verfahren zur Herstellung der Kautschukmischungen. Die so hergestellten Kautschukmischungen eignen sich zur Herstellung von Kautschukvulkanisaten mit verbesserten Eigenschaften, insbesondere mit verbessertem dynamischen Dämpfungsverhalten, verringertem Abrieb und verbessertem Nassrutschverhalten. Sie eignen sich insbesondere zur Herstellung von Kraftfahrzeugsreifen mit verbessertem Eigenschaftsprofil.

Kautschukmischungen aus Kautschuken mit hydrophobierten oxidischen und silikatischen Füllstoffen, insbesondere Kieselsäuren, besitzen im Gegensatz zu den Kautschukmischungen mit den nichthydrophobierten Füllstoffen, verarbeitungstechnische Vorteile, wie z.B. geringere Mischungsviskosität. Nachteilig ist, dass das Verstärkungsverhalten des Füllstoffs als Folge der Hydrophobierung in der Regel geringer ist.

WO-A 98/53004 beschreibt Kautschukmischungen mit hydrophobierten oxidischen und silikatischen Füllstoffen, hergestellt durch Hydrophobierung von Kieselsäure in Wasser mittels spezieller Aminosilane und anschließender Aufarbeitung mit Kautschuklösungen. Als Kautschuke werden unmodifizierte Standardkautschuke verwendet.

EP-A 890.600 beschreibt ein Verfahren zur gemeinsamen Aufarbeitung von Kautschuken mit hydrophobierten Füllstoffen. Es kommen dabei lediglich Standardkautschuke zum Einsatz. Die besonderen Vorteile von hydroxyl- und carboxylgruppenhaltigen Kautschuken für derartige Kautschukmischungen werden nicht erkannt.

EP-A 849.320 beschreibt Kautschukmischungen aus Kautschuk und hydrophobierten oxidischen und silikatischen Füllstoffen sowie ein Herstellungsverfahren für hydrophobierte Kieselsäure und gemeinsame Aufarbeitung mit Kautschuklatices. Die besonderen Vorteile von hydroxyl- und carboxylgruppenhaltigen Kautschuken für derartige Kautschukmischungen werden ebenfalls nicht erkannt.

DE-A 2.653.144 und EP-A 806.452 beschreiben hydroxyl und/oder carboxylmodifizierte Kautschukmischungen mit Füllstoffen. Die dort beschriebenen Kautschukmischungen enthalten jedoch lediglich nichthydrophobierte Kieselsäure und zu hohe bzw. zu niedrige Gehalte an funktionellen Gruppen am Lösungskautschuk. Es wurde nicht erkannt, dass für die Anwendung ein bestimmter eng begrenzter Gehalt an Hydroxyl- oder Carboxylgruppen erforderlich ist, um die relevanten Reifeneigenschaften wie Nassrutschfestigkeit, Rollwiderstand und Abrieb, gleichzeitig deutlich zu verbessern und nicht nur die eine Eigenschaft auf Kosten der anderen.

Es wurde nun überraschend gefunden, dass Kautschukmischungen und Kautschukvulkanisate aus Kautschuken, bevorzugt Lösungskautschuken, mit einem Gesamtgehalt an Hydroxyl-und/oder Carboxylgruppengehalt von 0,1 bis 3 Gew. % und hydrophobierten oxidischen und silikatischen Füllstoffen besonders gute Eigenschaften besitzen, die es ermöglichen alle drei technisch relevanten Reifeneigenschaften, wie Nassrutschfestigkeit, Rollwiderstand und Abrieb, gleichzeitig deutlich zu verbessern und nicht nur die eine Eigenschaft auf Kosten der anderen.

Gegenstand der vorliegenden Erfindung sind daher Kautschukmischungen, bestehend aus einem Kautschuk, der einen Gesamtgehalt an Hydroxyl- und/oder Carboxylgruppen von 0,1 bis 3 Gew. %, bevorzugt 0,1 bis 2 Gew.-%, aufweist, und 5 bis 500 Gew.-Teilen, bevorzugt 10 bis 200 Gew.-Teilen, bezogen auf 100 Gew.-Teile Kautschuk, hydrophobierten oxidischen und/oder silikatischen Füllstoff sowie gegebenenfalls weiteren Kautschuken, Kautschukhilfsmitteln und Vernetzern.

Ein weiterer Gegensstand der vorliegenden Erfindung ist ein Verfahren zur Herstellung der erfindungsgemäßen Kautschukmischungen, das dadurch gekennzeichnet ist, dass man eine Lösung eines Kautschuks mit einem Gesamtgehalt an Hydroxyl-und/oder Carboxylgruppen von 0,1 bis 3 Gew. %, bevorzugt 0,1 bis 2 Gew. %, mit 5 bis 500 Gew-Teilen, bevorzugt 10 bis 200 Gew.-Teilen, hydrophobiertem oxidischen und/oder silikatischen Füllstoff, bezogen auf 100 Gew. Teile Kautschuk, vermischt und während oder nach dem Mischvorgang das Lösungsmittel mit heißem Wasser und/oder Wasserdampf bei 50° bis 200°C, bevorzugt 60 bis 150°C, entfernt.

Hierbei kann die Kautschuklösung weitere unmodifizierte Kautschuke sowie Kautschukhilfsmittel, wie Weichmacher und Hilfsstoffe für die Verarbeitung, Aktivierung und Stabilisierung enthalten.

Ein vergleichbares Verfahren zur Herstellung von Kautschukmischungen durch Vermischen der Bestandteile in Lösung ist z.B. in EP-A 890 600 und WO-A 98/53 004 beschrieben.

Unter hydrophobierten oxidischen und silikatischen Füllstoffen sind in diesem Zusammenhang solche oxidischen und/oder silikatischen Füllstoffe zu verstehen, die im trockenen Zustand (Trocknungsverlust ≤ 5 Gew. % nach DIN ISO 787 / 2 bei 105° C) bei Raumtemperatur von Wasser nicht benetzt werden. Besonders bevorzugte hydrophobierte oxidische und silikatische Füllstoffe sind:
- A:: die gemäß EP-A 849.320 oder WO-A 98/53004 in wässriger Suspension mit Organosiliciumverbindungen oder mit speziellen Aminosilanen hydrophobierten oxidischen und/oder silikatischen Füllstoffe
oder
- B:: die gemäß EP-A 890.600 oder WO-A 98/47955 auf trockenem Wege hydrophobierten oxidischen und silikatischen Füllstoffen mit Methanolbenetzbarkeiten von 1 bis 60 Gew.-%.

Besonders geeignete hydrophobierte Füllstoffe nach den Verfahren A und B werden erhalten durch Hydrophobierung von
- hochdispersen Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-, Tioxiden, vorliegen,
- synthetischen Silikaten, wie Aluminiumsilikat, Erdalkalisilikat, wie Magnesiumsilikat oder Calciumsilikat, mit BET-Oberflächen von 20 bis 400 m²/g und Primärteilchendurchmessern von 10 bis 400 nm,
- natürlichen Silikaten, wie Kaolin und andere natürlich vorkommende Kieselsäure,
- Glasfasern und Glasfaserprodukte (Matten, Stränge) oder Mikroglaskugeln,
- Metalloxiden, wie Zinkoxid, Calciumoxid, Magnesiumoxid, Aluminiumoxid,
- Metallcarbonaten, wie Magnesiumcarbonat, Calciumcarbonat, Zinkcarbonat,
- Metallhydroxiden, wie Aluminiumhydroxid, Magnesiumhydroxid.

Zur Herstellung der Kautschukmischungen eignen sich im Prinzip alle unvernetzten Kautschuke mit dem angegebenen Gesamtgehalt an Hydroxyl-und/oder Carboxylgruppen. Dies sind z.B. mit der erforderlichen Menge an Hydroxyl- und/oder Carboxylgruppen modifizierte Kautschuke aus der Reihe Naturkautschuk, Polybutadien, Butadien/Acrylsäure-C₁₋₄-alkylester-Copolymere, Polyisopren, Styrol/Butadien-Copolymerisate mit Styrolgehalten von 1 bis 60, vorzugsweise 15 bis 50 Gew.-%, Isobutylen/Isopren-Copolymere mit Acrylnitrilgehalten von 5 bis 60, vorzugsweise 10 bis 40 Gew.-%, teilhydrierter oder vollständig hydrierter NBR-Kautschuk sowie Ethylen/Propylen/Dien-Copolymerisate. Die entsprechenden hydroxylgruppenfreien Kautschuke sind z.B. in I.Franta, Elastomers and Compunding Materials, Elsevier, Amsterdam 1989, beschrieben.

Besonders bevorzugte erfindungsgemäße Kautschuke werden z.B. in den deutschen Patentanmeldungen Nr. 198 32 549.6, 198 52 648.2, 199 14 848.1, 199 20 788.7, 199 20 814.8 sowie DE-A 2.653.144 und EP-A 464.478 beschrieben und sind in Lösung hergestellte Dienkautschuke mit einem Gesamtgehalt von 0,1 bis 3 Gew. % gebundenen Hydroxyl- und/oder Carboxylgruppen sowie aus Diolefinen und gegebenenfalls weiteren vinylaromatischen Monomeren hergestellte Dienkautschuke mit einem Gehalt an einpolymerisierten Vinylaromaten von 0 bis 40 Gew. % und einem 1.2-Vinylgehalt von 0 bis 60 Gew. %. Die Modifizierung der Dienkautschuke wird bewerkstelligt durch die Anlagerung von Hydroxylmercaptanen und/oder Carboxylmercaptanen an die zugrunde liegenden Lösungskautschuke.

Geeignete Diolefine sind insbesondere 1,3-Butadien, Isopren, 1,3-Pentadien, 2,3-Dimethylbutadien, 1-Phenyl-1,3-butadien und 1,3-Hexadien. Besonders bevorzugt sind 1,3-Butadien und Isopren.

Geeignete vinylaromatische Monomere sind Styrol, o-, m- und p- Methylstyrol, p-tert.-Butylstyrol, alpha-Methylstyrol, Vinylnaphthalin, Divinylbenzol, Trivinylbenzol und Divinylnaphthalin. Besonders bevorzugt ist Styrol.

Die hydroxyl- und carboxylgruppenhaltigen Kautschuke besitzen mittlere Molgewichte (Zahlenmittel) von 20.000 bis 2.000.000 und Glastemperaturen von -110° bis +20°C.

Geeignete Lösungsmittel für das erfindungsgemäße Verfahren sind z.B. Kohlenwasserstoffe, wie Butan, Pentan, Hexan, Cyclohexan, Benzol, Toluol, Xylol oder deren Gemische.

Die erfindungsgemäßen Kautschukmischungen können weitere nicht modifizierte Kautschuke, wie Naturkautschuk und Synthesekautschuke, enthalten. Bevorzugte Synthesekautschuke sind beispielsweise bei W. Hofmann, Kautschuktechnologie, Gentner Verlag, Stuttgart 1980, beschrieben. Sie umfassen u.a.

| | |
|---|---|
| BR - | Polybutadien |
| ABR - | Butadien/Acrylsäure-C₁₋₄-alkylester-Copolymere |
| CR - | Polychloropren |
| IR - | Polyisopren |
| SBR - | Styrol/Butadien-Copolymerisate mit Styrolgehalten von 1 bis 60, |
| | vorzugsweise 20-50 Gew. % |
| IIR - | Isobutylen/Isopren-Copolymerisate |
| NBR - | Butadien/Acrylnitril-Copolmere mit Acrylnitrilgehalten von 5-60, |
| | vorzugsweise 10-40 Gew.-% |
| HNBR - | teilhydrierter oder volllständig hydrierter NBR-Kautschuk |
| EPDM - | Ethylen/Propylen/Dien-Copolymerisate |

sowie Mischungen dieser Kautschuke. Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die ggf. mit Silylethern oder anderen funktionellen Gruppen, modifiziert sein können, wie z.B. in der EP-A 447.066 beschrieben, Polybutadienkautschuk mit hohem 1.4-cis-Gehalt (> 90 %), der mit Katalysatoren auf Basis Ni, Co, Ti oder Nd hergestellt wird, sowie Polybutadienkautschuk mit mit einem Vinylgahalt von 0 bis 75 % sowie deren Mischungen von Interesse.

Selbstverständlich können die erfindungsgemäßen Kautschukmischungen noch andere Kautschukhilfsmittel enthalten, die beispielsweise die physikalischen Eigenschaften der aus den erfindungsgemäßen Kautschukmischungen hergestellten Vulkanisate für deren speziellen Einsatzzweck verbessern, sowie sogenannte Vernetzer.

Als Vernetzeragentien werden vor allem Schwefel oder Schwefel-liefernde Verbindungen oder Peroxide eingesetzt. Besonders bevorzugt werden Schwefel oder Schwefel-liefernde Verbindungen in Mengen von ca. 0,01 bis 3 Gew.-Teile, bezogen auf Menge an Kautschuk, eingesetzt. Darüber hinaus können, wie erwähnt, die erfindungsgemäßen Kautschukmischungen weitere Hilfsmittel, wie die bekannten Reaktionsbeschleuniger, Alterungsschutzmittel, Wärmestabilisatoren, Lichtschutzmittel, Ozonschutzmittel, Verarbeitungshilfsmittel, Verstärkerharze, z.B. Phenolharze, Stahlcord-Haftmittel, wie z.B. Kieselsäure/Resorcin/Hexamethylentetramin oder Cobalt-Naphtennat, Weichmacher, Tackifier, Treibmittel, Farbstoffe, Pigmente, Wachse, Streckmittel, organische Säuren, Verzögerer, Metalloxide sowie Aktivatoren, enthalten.

Die erfindungsgemäßen Kautschukhilfsmittel werden in den üblichen, bekannten Mengen eingesetzt, wobei sich die eingesetzte Menge nach dem späteren Verwendungszweck der Kautschukmischungen richtet. Üblich sind beispielsweise Mengen an Kautschukhilfsmitteln im Bereich von ca. 2 bis 70 Gew.-Teilen, bezogen auf 100 Gew.-Teile Kautschuk.

Wie zuvor erwähnt, können den erfindungsgemäßen Kautschukmischungen neben dem Hydroxyl- und Carboxylgruppen-haltigen Lösungskautschuk noch zusätzliche Kautschuke zugemischt werden. Deren Menge liegt üblicherweise im Bereich von 0,5 bis 70, bevorzugt 10 bis 50 Gew.-%, bezogen auf die gesamte Kautschukmenge in der Kautschukmischung. Die Menge an zusätzlich zugegebenen Kautschuken richtet sich wieder nach dem jeweiligen Verwendungszweck der erfindungsgemäßen Kautschukmischungen.

Für die erfindungsgemäßen Kautschukmischungen, die mit hochaktiven Füllstoffen gefüllt sind, ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie sie in DE-A 2.141.159 und DE-A 2.255.577 beschrieben sind. Darüber hinaus kommen in Frage oligomere und/oder polymere schwefelhaltige Silylether entsprechend der Beschreibung in DE-A 4.435.311 und EP-A 670.347. Außerdem sind einzusetzen Mercapatoalkyltrialkoxisilane, insbesondere Mercaptopropyltriethoxisilan und Thiocyanatoalkylsilylether (siehe DE-A 19.544.469) sowie aminogruppenhaltige Silylether, wie z.B. 3-Aminopropyltriethoxisilan und N-Oleyl-N-propyltrimethoxisilan. Die Füllstoffaktivatoren werden in üblichen Mengen eingesetzt, d.h. in Mengen von 0,1 bis 15 Gew.-Teilen, bezogen auf 100 Gew.-Teile an Kautschuk.

Die erfindungsgemäßen Kautschukmischungen können neben dem bevorzugten Herstellungsverfahren auch hergestellt werden z.B. durch Abmischung der Hydroxyl- und Carboxylgruppen-haltigen Lösungskautschuke mit den entsprechenden hydrophobierten Füllstoffen in geeigneten Mischapparaturen, wie Knetern, Walzen oder Extrudern.

Ein weiterer Gegenstand der vorliegenden Erfindung ist die Verwendung der erfindungsgemäßen Kautschukmischungen zur Herstellung von Vulkanisaten, die wiederum für die Herstellung von hochverstärkten Kautschuk-Formkörpern, insbesondere für die Herstellung von Reifen, dienen.

### Beispiele:

### Beispiel 1:

### Mit 7,5 Gew. % Ricinusöl hydrophobierte Kieselsäure (analog EP-A 890.600)

350 g HiSil 233 (gefällte Kieselsäure mit BET Oberfläche der Fa. PPG, USA) und 26,3 g Ricinusöl wurden unter Rühren in einem Dreihalskolben 3 Stunden auf 220°C erhitzt und destillierte hierbei das Wasser ab. Man erhielt 352 g einer hydrophobierten Kieselsäure mit einer Methanolbenetzbarkeit von 19 Gew. %. (Es wurde das Verfahren der EP 890.600 zur Bestimmung der Methanolbenetzbarkeit verwendet).

### Beispiel 2:

### Herstellung eines aktivierten Masterbatches aus trockener hydrophobierter Kieselsäure, Mineralölweichmacher, Silan-Füllstoffaktivator und carboxylgruppenhaltigem Lösungs-SBR

Eine Lösung von 500 g Lösungs-SBR-Kautschuk, Buna VSL 5025-0 (Bayer AG, Gehalt an gebundenem Styrol 25 Gew. %, Gehalt an 1.2-gebundenem Butadien 50 Gew. %) in 4 l Cyclohexan wurde bei 80°C mit 6,25 g 3-Mercaptopropionsäure und 0,5 g Dilauroylperoxid versetzt. Anschließend rührte man 2,5 Stunden bei 80°C nach. Dann setzte man 2,5 g Stabilisator Vulkanox® 4020 (Bayer AG) hinzu. Der so modifizierte Kautschuk besaß einen Carboxyl-Gehalt von 0,5 Gew. % und eine Mooneyviskosität ML 1+4 (100°C) 84.

In diese Kautschuklösung rührte man bei 70°C 159,5 g aromatisches Mineralöl Enerthene 1849-1 (BP), 420 g der hydrophobierten Kieselsäure gemäß Beispiel 1 sowie 32,4 g Bis-triethoxisilylpropyl-tetrasulfid (Silan Si 69, Degussa) ein rührte 30 Minuten nach. Anschließend wurde das Lösungsmittel mittels Wasserdampfdestillation entfernt. Nach dem Trocknen bei 70°C im Vakuum erhielt man 1066 g einer bereits aktivierten Kieselsäure/Kautschukmischung aus 83 phr hydrophobierter Kieselsäure, 31,5 phr Mineralölweichmacher, 6,5 phr Silan-Füllstoffaktivator und carboxylgruppenhaltigem Lösungs-SBR mit einer Mooneyviskosität ML 1+4 bei (100° C) 162.

### Beispiel 3:

### Herstellung eines aktivierten Masterbatches aus trockener hydrophobierter Kieselsäure, Mineralölweichmacher, Silan-Füllstoffaktivator und hydroxylgruppenhaltigem Lösungs-SBR

Eine Lösung von 500 g Lösungs-SBR-Kautschuk Buna VSL 5025-0 (Bayer AG, Gehalt an gebundenem Styrol 25 Gew. %, Gehalt an 1.2-gebundenem Butadien 50 Gew. %) in 4 l Cyclohexan wird bei 80°C mit 12,5 g 1-Mercapto-2-ethanol und 1,33 g Dilauroylperoxid versetzt. Anschließend rührte man 3 Stunden bei 80°C nach. Dann setzte man 2,5 g Stabilisator Vulkanox 4020 (Bayer AG) hinzu. Der so modifizierte Kautschuk besaß einen Hydroxylgruppengehalt von 0,5 Gew. %.

In diese Kautschuklösung rührte man bei 70°C 161,4 g aromatisches Mineralöl Enerthene 1849-1 (BP), 420 g der hydrophobierten Kieselsäure gemäß Beispiel 1 sowie 32,8 g Bis-triethoxisilylpropyl-tetrasulfid (Silan Si 69, Degussa) ein und rührte 30 Minuten nach. Anschließend wurde das Lösungsmittel mittels Wasserdampfdestillation entfernt. Nach dem Trocknen bei 70°C im Vakuum erhielt man 1099 g einer bereits aktivierten Kieselsäure/Kautschukmischung aus 82 phr hydrophobierter Kieselsäure, 31,5 phr Mineralölweichmacher, 6,5 phr Silan-Füllstoffaktivator und hydroxylgruppenhaltigem Lösungs-SBR mit einer Mooneyviskosität ML 1+4 (bei 100°C) 112.

### Vergleichsbeispiel 1:

### Herstellung eines aktivierten Masterbatches aus trockener hydrophobierter Kieselsäure, Mineralölweichmacher, Silan-Füllstoffaktivator und unmodifiziertem Lösungs-SBR

In eine Lösung von 80 g Lösungs-SBR-Kautschuk Buna VSL 5025-0 (Bayer AG, Gehalt an gebundenem Styrol 25 Gew. %, Gehalt an 1.2-gebundenem Butadien 50 Gew. %) und 577,5 g Lösungs-SBR-Kautschuk Buna VSL 5025-1 (Kautschuk der entsprechenden Zusammensetzung, der zusätzlich 37,5 phr aromatisches Mineralöl enthält) in 4 l Cyclohexan rührte man bei 70°C 420 g der hydrophobierten Kieselsäure gemäß Beispiel 1 sowie 32 g Bis-triethoxisilylpropyl-tetrasulfid (Silan Si 69, Degussa) ein rührte 30 Minuten nach. Anschließend wurde das Lösungsmittel mittels Wasserdampfdestillation entfernt. Nach dem Trocknen bei 70°C im Vakuum erhielt man 1099 g einer bereits aktivierten Kieselsäure/Kautschukmischung aus 84 phr hydrophobierter Kieselsäure, 31,5 phr Mineralölweichmacher, 6,5 phr Silan-Füllstoffaktivator und unmodifiziertem Lösungs-SBR mit einer Mooneyviskosität ML 1+4 (bei 100°C) 100.

### Beispiel 4:

### Kautschukmischungen und -vulkaniate:

Die folgenden Substanzen wurden in einem 1,5 1 Kneter (Drehzahl 60 UpM, Füllgrad 65 %, Starttemperatur 70°C, Dauer: 5 Minuten) gemischt. Anschließend wurden die Mischungen entnommen und Schwefel und Beschleuniger auf einer Walze bei 40°C Walzentemperatur zugemischt. Die Mengenangaben beziehen sich auf Gewichtsteile:

| | **Vergleich** | **Beispiel** | **Beispiel** |
|---|---|---|---|
| **Mischungsbestandteile:** | **4.A** | **4.1** | **4.2** |
| im 1,5 l Kneter wurden gemischt: | | | |
| Masterbtach aus L-SBR und hydro- | 221,9 | 0 | 0 |
| phob.Kieselsäure gem. Vergleichsbeispiel 1 | | | |
| Masterbatch aus carboxylgruppenhaltigem-L- | 0 | 222,4 | 0 |
| SBR und hydrophob. Kieselsäure gem. | | | |

| Beispiel 2 | | | |
|---|---|---|---|
| Masterbatch aus hydroxylgruppenhaltigem-L- | 0 | 0 | 222,4 |
| SBR und hydrophob. Kieselsäure gem. | | | |

| Beispiel 3 | | | |
|---|---|---|---|
| Stearinsäure | 1 | 1 | 1 |
| Zinkoxid RS (Bayer AG) | 3 | 3 | 3 |
| Alterungsschutzmittel Vulkanox 4020 (Bayer) | 1 | 1 | 1 |
| Alterungsschutzmittel Vulkanox HS (Bayer) | 1 | 1 | 1 |
| | | | |

| auf der Walze wurde zugemischt: | | | |
|---|---|---|---|
| Sulfenamidbeschleuniger Vulkacit CZ (Bayer) | 1,8 | 1,8 | 1,8 |
| Guanidinbeschleuniger Vulkacit D (Bayer) | 2 | 2 | 2 |
| Schwefel | 1,5 | 1,5 | 1,5 |
| | | | |
| Mischungsviskosität ML 1+4 (100°C) | 68 | 71 | 63 |

| die Mischungen wurden anschließend bei 170°C vulkanisiert. | | | |
|---|---|---|---|
| Vulkanisationszeiten: | 15 | 15 | 15 Min. |

| **Vulkanisateigenschaften:** | | | |
|---|---|---|---|
| | | | |
| Spannungswert bei 100 % Dehnung (MPa) | 2,7 | 3,8 | 2,8 |
| Spannungswert bei 300 % Dehnung (MPa) | 10,9 | 15,6 | 13,8 |
| Zugfestigkeit (MPa) | 18,5 | 20,9 | 15,8 |
| Bruchdehnung (%) | 470 | 400 | 330 |
| Härte bei 23°C (Shore A) | 74 | 69 | 65 |
| Rückprallelastizität bei 70°C (%) | 43 | 50 | 51 |
| tan delta 0°C (DIN 53 513) | 0,497 | 0,706 | 0,577 |
| tan delta 60°C (DIN 53 513) | 0,18 | 0,107 | 0,122 |
| Abrieb (DIN 53 516) | 143 | 66 | 74 |

Die Messergebnisse zeigen, dass alle drei technisch relevanten Reifeneigenschaften der erfindungsgemäßen Kautschukvulkanisate aus hydrophobierter Kieselsäure und des mit 0,5 Gew. % Carboxylgruppen (Beispiel 4.1) und mit 0,5 Gew. % Hydroxylgruppen (Beispiel 4.2) modifizierten Lösungskautschuk wesentlich besser sind als die der Vulkanisate aus der gleichen hydrophobierten Kieselsäure mit unmodifiziertem Lösungskautschuk. Hierbei korrelieren hohe Dämpfungswerte bei 0°C (gemessen als tan delta bei 0°C) mit einer hohen Nassrutschfestigkeit und niedrige Dämpfungswerte bei 60°C (gemessen als tan delta bei 60°C) mit geringen Rollwiderstand beim Reifen.

### Beispiel 5:

### Herstellung eines aktivierten Masterbatches aus 80 phr, mit 4 phr N-Oleyl-N-(trimethoxysilyl)propyl-ammoniumchlorid hydrophobierter Kieselsäure, 37,5 phr Mineralölweichmacher, 6,4 phr Silan-Füllstoffaktivator und carboxylgruppenhaltigem Lösungs-SBR

### 5.1 Herstellung des carboxylgruppenhaltigen Lösungs-SBR-Kautschuks:

Eine Lösung von 592 g Lösungs-SBR-Kautschuk Buna VSL 5020-0® (Bayer AG, Gehalt an gebundenem Styrol 20 Gew.-% Gehalt an 1.2-gebundenem Butadien 50 Gew.-%) in 4 l Cyclohexan wurde bei 80°C mit 7,4 g 3-Mercaptopropionsäure und 0,6 g Dilauroylperoxid versetzt. Anschließend rührte man 2,5 Stunden bei 80°C nach. Dann setzte man 2,7 g Stabilisator Vulkanox 4040® (Bayer AG) hinzu. Der so modifizierte Kautschuk besaß einen Carboxyl-Gehalt von 0,5 Gew.-% und eine Mooneyviskosität ML 1+4 (100°C) 90. Die Kautschuklösung wurde zum Schluss mit 225 g aromatischem Mineralöl Mobilsol K (Mobil Oil) versetzt.

### 5.2 Herstellung der hydrophobierten und aktivierten Kieselsäure-Dispersion

Zur Herstellung der hydrophobierten und aktivierten Kieselsäure-Dispersion wurden 480 g Kieselsäure HiSil 233® (PPG) unter Rühren in 1920 g vollentsalztem Wasser dispergiert und auf 80°C erwärmt. In die auf 80°C erwärmte Kieselsäure-Dispersion wurden innerhalb von 5 Minuten 2,40 g N-Oleyl-N-(trimethoxysilyl)propyl-ammoniumchlorid (in Form von 50 %iger Lösung in Methanol) gefolgt von 17,79 g 2 %iger Natronlauge zugegeben. Dann wurden 38,4 g Si 69® innerhalb von 30 Minuten zugegeben und 30 Minuten nachgerührt. Als letzter Schritt wurden innerhalb 15 Minuten 21,60 g N-Oleyl-N-(trimethoxysilyl)propyl-ammoniumchlorid (in Form von 50 %iger Lösung in Methanol) und anschließend 16,80 g 10 %iger Natronlauge zugegeben. Es wurde 5 Minuten nachgerührt.

### 5.3 Mischen von Kautschuklösung und mit der hydrophierten und aktivierten Kieselsäure-Dispersion

Die Cyclohexan-Lösung aus Beispiel 5.1 (enthaltend 600 g des carboxylierten SBR-Kautschuks) wurde mit der hydrophobierten und aktivierten Kieselsäure-Dispersion aus Beispiel 5.2 versetzt und 2 Stunden unter Rühren vermischt.

### 5.4 Koagulation und Strippen der Mischung aus Kautschuk und hydrophobierter/aktivierter Kieselsäure

Der Mischung wurden 4,5 l vollentsalztes Wasser zugegeben und unter Rühren und Einleiten von Dampf das Lösungsmittel entfernt. Die resultierenden Masterbatchkrümel sahen homogen aus. Die Masterbatchkrümel wurden über ein 0,5 mm Sieb isoliert. Das Serum wies eine sehr geringe Trübung auf und wurde über ein 589³ Blue ribbon ashless filter paper circle filtriert. Der Filter wurde getrocknet. Die Gewichtsdifferenz des trockenen Filters vor und nach Filtration entsprach der Menge an Kieselsäureverlust und betrug 0,16 % der eingesetzten Kieselsäure, d.h. der Kautschuk/Kieselsäure-Masterbatch enthielt 99,84 % der eingesetzten Kieselsäure. Der feuchte Masterbatch wurde bei 70°C im Vakuumtrockenschrank getrocknet.

### Vergleichsbeispiel 2:

### Masterbatch aus 80 phr hydrophobierter Kieselsäure, 37,5 phr Mineralölweichmacher, 6,4 phr Silan-Füllstoffaktivator und unmodifiziertem Lösungs-SBR

Es wurde wie Beispiel 5 verfahren, wobei jedoch 600 g eines unmodifizierten Lösungs-SBR-Kautschuk Buna VSL 5020-0® verwendet wurde (auf die Umsetzung mit 3-Mercaptopropionsäure wurde verzichtet).

### Beispiel 6:

### Kautschukmischungen und Vulkanisate:

Es wurde wie in Beispiel 4 verfahren, wobei folgende Mischungsbestandteile verwendet wurden:

| **Mischungsbestandteile** | **Vergleich** | **Beispiel** |
|---|---|---|
| | **6.A** | **6.1** |
| im 1,5 l Kneter wurden gemischt: | | |
| SiO₂/L-SBR-Masterbatch gem. | 227,9 | 0 |
| Vergleichsbeispiel 2 | | |
| SiO₂/L-SBR-Masterbatch gem. Bsp. 5 | 0 | 227,9 |
| Zinkoxid RS (Bayer) | 3 | 3 |
| Stearinsäure | 1 | 1 |
| Vulkanox HS (Bayer) | 1 | 1 |
| Vulkanox 4020 (Bayer) | 1 | 1 |
| | | |

| auf der Walze wurde zugemischt: | | |
|---|---|---|
| Vulkacit CZ (Bayer) | 1,8 | 1,8 |
| Vulkacit D (Bayer) | 2 | 2 |
| Schwefel | 1,5 | 1,5 |

Die Mischungen wurden bei 170°C/25 Minuten vulkanisiert. Man erhielt folgende Vulkanisateigenschaften

| | **Vergleich** | **Beispiel** |
|---|---|---|
| | **6.A** | **6.1** |
| Zugfestigkeit (MPa) | 18 | 20,5 |
| Spannungswert bei 300 % Dehnung (MPa) | 10,7 | 17,9 |
| Bruchdehnung (%) | 450 | 340 |
| Härte (Shore A) | 68 | 61 |
| tan delta bei 0°C | 0,686 | 0,77 |
| tan delta bei 60°C | 0,119 | 0,085 |
| Abrieb DIN 53516 (ccm) | 111 | 100 |

## Patentansprüche

1. Kautschukmischungen, bestehend aus einem Kautschuk, der einen Gesamtgehalt an Hydroxyl- und/oder Carboxylgruppen von 0,1 bis 3 Gew. % aufweist, und 5 bis 500 Gew. Teilen, bezogen auf 100 Gew. Teile Kautschuk, hydrophobierten oxidischen und/oder silikatischen Füllstoff sowie gegebenenfalls weiteren Kautschuken, Kautschukhilfsmitteln und Vernetzern.

2. Verfahren zur Herstellung von Kautschukmischungen nach Anspruch 1, dadurch gekennzeichnet, dass man eine Lösung eines Kautschuks mit einem Hydroxyl- und/oder Carboxylgruppengehalt von 0,1 bis 3 Gew. % mit 5 bis 500 Gew. Teilen hydrophobiertem oxidischen und/oder silikatischen Füllstoff, bezogen auf 100 Gew. Teile Kautschuk, vermischt und während oder nach dem Mischvorgang das Lösungsmittel mit heißem Wasser und/oder Wasserdampf bei 50° bis 200°C entfernt.

3. Verwendung der Kautschukmischungen gemäß Anspruch 1 zur Herstellung von Kautschukvulkanisaten, insbesondere Reifen und Reifenlaufflächen.
